# EUROPEAN PATENT APPLICATION

(11) **EP 4 721 564 A1**
(43) Date of publication of application: **08.04.2026**
(21) Application number: 25206440.7
(22) Date of filing: 02.10.2025
(51) Int. Cl.: A01N 33/12, A01N 35/02, A01N 35/04, A01N 43/40, A01P 1/00

(54) **COMPOSITIONS AND METHODS FOR DISINFECTING VEHICLES AND CARGO USED FOR TRANSPORTING ANIMALS**

(30) Priority: 03.10.2024 US 202463702737 P
(71) Applicant: Sani-Marc Inc., Victoriaville, Quebec G6P 7E3 (CA)
(72) Inventor: ROMANENS, Alexandre, Notre-Dame-du-Bon-Conseil, QC, J0C 1A0 (CA); AYOTTE-NADEAU, Pierre-Luc, Trois-Riviere, QC, G8Y 6V3 (CA); ROY, Pierre-Andre, Ham-Nord, QC, G0P 1A0 (CA); MARCHAND, Patrick, Victoriaville, QC, G6P 8B5 (CA)
(74) Representative: De Clercq & Partners

(57) **Abstract**

Described are bactericidal and virucidal fast-drying disinfecting compositions and methods for use in the animal transportation industry. The compositions comprise at least one biocide and at least one rinse agent. In particular embodiments, the disinfecting compositions comprise at least one quaternary ammonium salt (QAS), at least one aldehyde, and at least one rinse agent. Advantageously, the disinfecting compositions of the invention are rinse-free such that they dry without additional rinsing step. Furthermore, the time for drying is faster than similar commercial products.

## Description

### CROSS REFERENCE TO RELATED APPLICATION

The present application claims priority to United States provisional patent application serial number U.S. 63/702,737 filed on October 03, 2024.

### FIELD OF THE INVENTION

The invention relates to the field bactericidal and virucidal disinfecting compositions and methods, and more particularly to a fast-drying disinfectant for use in the animal transportation industry.

### BACKGROUND OF THE INVENTION

Transportation of live animals represents a significant risk of disease transmission among transported animals. Transmission of virus and bacteria may be caused because of the proximity with sick animals or by the vehicle itself which can act as a transmission vector if the vehicle is contaminated with a pathogen. Disease transmission is not only bad for the animals, it is also bad for the economy. In Canada alone, it is estimated that Porcine Reproductive and Respiratory Syndrome (PRRS) costs the Canadian pork industry nearly $130 million annually. The Porcine Epidemic Diarrhea Virus (PEDV) is also a problematic virus, causing the death of infected pigs in 70 to 100% of cases. Transportation of animals has been shown to be an important contributing factor in the introduction and spread of both viruses. Transportation is also involved in spread of epidemic in many other species, such as avian influenza (bird flu).

Biosafety is thus a matter of utmost importance and strict sanitary management during transportation are required to limit the spread of diseases. Among the many biosafety measures that can reduce disease transmission, proper cleaning and disinfection of trucks carrying animals is critical. However, current cleaning and disinfection methods and compositions not ideal, at least because they require many steps (e.g., scraping step, water pre-rinsing, cleaning with a detergent, and water rinsing) and/or because they require a lot of time for the drying after the cleaning.

There is thus a need for effective bactericidal and virucidal disinfecting compositions.

There is particularly a need for a fast-drying disinfectant for use in the animal transportation industry, including sanitization of containers, trailers and transport vehicles.

Yet, there is a need for a fast-drying disinfecting composition comprising at least one biocide and at least one rinse agent.

Yet, there is a particular need exist for a disinfecting composition comprising at least one quaternary ammonium salt (QAS), at least one aldehyde, and at least one rinse agent.

The present invention addresses these needs and other needs as it will be apparent from the review of the disclosure and description of the features of the invention hereinafter.

### BRIEF SUMMARY OF THE INVENTION

According to one aspect, the invention relates to a disinfecting composition, comprising (i) at least one biocide selected from the group consisting of a quaternary ammonium salt, an aldehyde, a peroxide salt, a metallic-based compound, and mixtures thereof, wherein said at least one biocide minimally comprises a quaternary ammonium salt; and (ii) at least one rinse agent; wherein said disinfecting composition is effective for sanitization of an animal transportation unit.

According to another aspect, the invention relates to a disinfecting composition comprising at least one quaternary ammonium salt (QAS), at least one aldehyde and at least one rinse agent, wherein said disinfecting composition is effective for sanitization of an animal transportation unit.

According to another aspect, the invention relates to a method for the sanitization of an animal transportation unit, comprising the steps of: (1) optionally scraping the animal transportation unit; (2) spraying a disinfecting composition as defined herein over the surface of the animal transportation unit; and (3) allowing to dry.

According to one particular aspect, the invention relates to a method for the sanitization of an animal transportation unit, comprising the steps of:
(1) scraping the animal transportation unit to remove residues;
(2) optionally spraying water over the animal transportation unit to remove remaining residues and soften any dried stuck residue;
(3) spraying the animal transportation unit with a degreasing agent;
(4) rinsing with water;
(5) spraying over the surface of animal transportation unit a disinfecting composition as defined herein; and
(6) allowing to dry.

Additional aspects, advantages and features of the present invention will become more apparent upon reading of the following non-restrictive description of preferred embodiments which are exemplary and should not be interpreted as limiting the scope of the invention.

### DETAILED DESCRIPTION OF EMBODIMENTS

The following description of the embodiments provides examples by which the invention may be practised. It will be understood that other embodiments may be made without departing from the scope of the invention disclosed. Unless defined otherwise, all technical and scientific terms used herein have the same meaning as commonly understood by one of ordinary skill in the art to which the invention belongs.

### General overview

The invention relates to the field bactericidal and virucidal disinfectants. Described herein are fast-drying disinfecting compositions and related methods for use in the animal transportation industry. The disinfecting compositions of the invention are particularly useful for sanitization of containers, trailers and transport vehicles being used in that industry.

### Fast-drying disinfectant

According to one particular aspect, the invention relates to a disinfecting composition comprising (i) at least one biocide and (ii) at least one rinse agent. In one particular embodiment, the at least one biocide is selected from the group consisting of a quaternary ammonium salt, an aldehyde, a peroxide salt, a metallic-based compound, and mixtures thereof. In embodiments, the at least one biocide minimally comprises a quaternary ammonium salt. In embodiments, metallic-based compound is selected from the group consisting of silver nitrate, silver citrate, silver chloride, silver nanoparticles, copper sulfate, copper oxide, copper iodide, copper gluconate, copper citrate, copper peptide, copper nanoparticles, zinc oxide, zinc pyrithione, zinc chloride, zinc acetate, zinc gluconate, titanium dioxide, titanium oxalate, titanium alkoxides, zinc nanoparticles, and titanium dioxide nanoparticles.

According to another particular aspect, the invention relates to a disinfecting composition, comprising at least one quaternary ammonium salt (QAS), at least one aldehyde, and at least one rinse agent.

The disinfecting compositions finds uses for sanitization of an animal transportation unit. Preferably, the disinfecting compositions are formulated for such particular use.

### Quaternary ammonium salt(s)

In accordance with the present invention, the at least one quaternary ammonium salt is important for the composition because it can exert a disinfecting action by altering the structure of the cell membrane of microorganisms, including bacteria, viruses, and fungi. Quaternary ammoniums are known to have several mechanisms of action. Among other things, they can interact with the lipid components of the cell membrane, inducing its disorganization and causing cell death. They can also coat the cell membrane and inhibit nutrients from entering the bacteria.

Specifically, the quaternary ammonium salt(s) can be an halide, for instance a n-alkyl diméthylbenzyl ammonium halide, an n-alkyl diméthyléthylbenzyl ammonium halide, an dialkyl diméthyl ammonium halide and mixtures thereof. Specific examples include, but are not limited to, benzalkonium chloride (BAC or BKC), cetylpyridinium chloride (CPC), cetyltriméthylammonium chloride (CTAC), didecyldimethylammonium chloride (DDAC), dodecyldimethylbenzylammonium chloride (DDBAC), benzéthonium chloride (BZT ou BTC), cetylpyridinium bromide (CPB), didecyldimethylammonium bromide (DDAB), benzyldodecyldimethylammonium bromide (BDAB), and mixtures thereof.

In accordance with the present invention, sulfates, sulfonates, nitrates, carbonates, phosphates, and carboxylates can serve as the anion component in quaternary ammonium salts. Accordingly, the present invention also encompasses quaternary ammonium sulfates, quaternary ammonium sulfonates, quaternary ammonium nitrates, quaternary ammonium carbonates, quaternary ammonium phosphates, and quaternary ammonium carboxylates.

In embodiments, the disinfecting composition is a concentrated composition and it comprises about 0.01% w/w to about 50% w/w quaternary ammonium salt(s), or about 5% w/w to about 30% w/w quaternary ammonium salt(s), or about 10% w/w to about 20% w/w quaternary ammonium salt(s). In embodiments, the disinfecting composition is a ready-to-use aqueous solution and it comprises about 0.001% w/w to about 1% w/w quaternary ammonium salt(s), or about 0.005% w/w to about 0.3% w/w quaternary ammonium salt(s), or about 0.01% w/w to about 0.1% w/w quaternary ammonium salt(s).

### Aldehyde(s)

Aldehyde(s) (e.g., glutaraldehyde), is also advantageously comprised in the disinfecting composition because compounds from that class have disinfecting capabilities by reacting with proteins and nucleic acids of microorganisms, leading to the denaturation and inactivation of these microorganisms. When an aldehyde such as glutaraldehyde penetrates through the cell wall of microorganisms it also disrupts the internal structures, and thus the functioning, growth and multiplication of the microorganisms.

In embodiments, the aldehyde is a non-corrosive aldehyde to avoid corrosion of the cleaning equipment and the surfaces to be cleaned and sanitized. The aldehyde can be a mono or dialdehyde, a mono, di, or monoalkyl conjugated aldehyde, or an aromatic aldehyde. In embodiments, the aldehyde is selected from formaldehyde, glutaraldehyde, ortho-phthalaldéhyde (OPA), paraformaldehyde, benzaldehyde, crotonaldehyde, cinnamaldehyde, glyoxal, and valeraldehyde (pentanal).

In embodiments, the disinfecting composition is a concentrated composition and it comprises about 0.01% w/w to about 40% w/w aldehyde(s), or about 2.5% w/w to about 25% w/w aldehyde(s), or about 5% w/w to about 15% w/w aldehyde(s). In embodiments, the disinfecting composition is a ready-to-use aqueous solution and it comprises about 0.001% w/w to about 1% w/w aldehyde(s), or about 0.005% w/w to about 0.3% w/w aldehyde(s), or about 0.01% w/w to about 0.1% w/w aldehyde(s).

### Rince agent(s)

Importantly, the composition further comprises at least one **"rinse agent",** which may also be referred as a **"rinse aid"** or a **"drying aid agent".** The rinse agent(s) is preferably selected for its capacity facilitate and/or accelerate the drying of the disinfecting composition once sprayed of a surface to be disinfected (e.g., transport vehicle). For instance, the rinse agent(s) may have water-repellent properties and/or hydrophobic/antistatic properties to prevent or reduce the formation of water droplets, thereby allowing water to flow off surfaces in thin layers instead of forming still droplets. The rinse agent may further enhance drying performance by reducing surface tension which will result in a greater "spreading" of the water, production of a thinner layer of water and therefore a faster evaporation of water because of the larger surface area. Also, the rinse agent may provide a greater evaporation by lowering the evaporation temperature of water. Preferably also, the at least one rinse agent is selected to prevent (or at least reduce) the formation of stains, it will leave no residue and it is compatible with different surfaces (e.g., stainless steel, aluminum, copper, galvanized steel, plastic, silicone, Teflon^{™}, concrete, etc. Accordingly, in particular embodiments, the disinfecting composition of the invention may be qualified as "fast-drying", "quick-drying", "self-drying", "rinse-free" or "no-rinse" or "spray-and-dry" or the like, meaning the disinfecting composition dries without additional step such as rinsing.

In embodiments, the at least one rinse agent is selected from the class of n-alkyltrimethyl ammonium methosulfates. Examples include, but are not limited to, cetrimonium methosulfate, steartrimonium methosulfate, behentrimonium methosulfate, lauryltrimonium methosulfate, distearyldimonium methosulfate, dioleoylethyl hydroxyethylmonium methosulfate, and mixtures thereof.

In embodiments, the at least one rinse agent is selected from the group consisting of cetyl ethylhexanoate, glycol ether PnB, diethylene glycol butyl ether, polyethylene glycol, silicone-based surfactant(s) (e.g., octamethyl cyclotetrasiloxane, decamethylcyclopentasiloxane, poly[3-((2-aminoethyl)amino)propyl]methyl(dimethyl)siloxane,methoxy-terminated, polyether modified polysiloxane, and mixtures thereof.

For instance, without being bound by any theory, cetyl ethylhexanoate (and similar fatty esters) has hydrophobic properties that may help spreading of water over a wet surface. As a result, water flows faster towards the ground, increasing the rate of water evaporation. Glycol ether PnB, polyethylene glycol, and diethylene glycol butyl ether are solvents that boost water evaporation. When these compounds evaporate, they carry water with them, thereby lowering the evaporation temperature of water. As for silicone-based surfactants they possess hydrophobic properties that promote water beading on surfaces, thereby leading to a faster drying and fewer streaks after the drying.

In embodiments, the disinfecting composition is a concentrated composition and it comprises about 0.01% w/w to about 40% w/w rinse agent(s), or about 1% w/w to about 30% w/ rinse agent(s), or about 2% w/w to about 10% w/w rinse agent(s). In embodiments, the disinfecting composition is a ready-to-use aqueous solution and it comprises about 0.001% w/w to about 0.5% w/w rinse agent(s), or about 0.005% w/w to about 0.1% w/w rinse agent(s), or about 0.01% w/w to about 0.05% w/w rinse agent(s).

### Metallic-based compounds

In embodiments, the at least one biocide comprises one or more metallic-based compound. As used herein the term **"metallic-based compound"** encompasses metallic molecules and metallic nanoparticles having biocidal activity. Examples include, but are not limited to, silver-based compounds (e.g., silver nitrate, silver citrate, silver chloride), silver nanoparticles, copper-based compounds (e.g., copper sulfate, copper oxide, copper iodide, copper gluconate, copper citrate, copper peptide), copper nanoparticles, zinc-based compounds (e.g., zinc oxide, zinc pyrithione, zinc chloride, zinc acetate, zinc gluconate), titanium-based compounds (e.g., titanium dioxide, titanium oxalate, titanium alkoxides), zinc nanoparticles, and titanium dioxide nanoparticles.

### Chelating agent(s)

In embodiments, the disinfecting activity of the quaternary ammonium compounds is enhanced in the presence of chelating agent(s). The chelating agent(s) is facultative but is useful since it helps stabilizing the quaternary ammonium(s) in an active state, thereby increasing the effectiveness of the disinfectant solution, especially in the presence of hard water (e.g., water having a hardness of at least 200 ppm, or at least 400 ppm, or at least 600 ppm, or at least 800 ppm). Indeed, metal ions such as calcium or magnesium disadvantageously interact with quaternary ammonium compounds, reducing their ability to adhere to the surface of pathogens.

Examples of suitable chelating agents include, but are not limited to, tetrasodium EDTA, trisodium methylglycinediacetate (MGDA), ethylenediamine disuccinic acid (EDDS), citric acid, sodium citrate, and tetrasodium glutamate diacetate (GLDA), aminotris(methylenephosphonic acid (ATMP), etidronic acid, acidic forms thereof and mixtures thereof.

In embodiments, the disinfecting composition is a concentrated composition and it comprises up to about 20% w/w chelating agent(s), or up to about 10% w/w chelating agent(s), or up to about 5% chelating agent(s). In embodiments, the disinfecting composition is a ready-to-use aqueous solution and it comprises up to about 1% w/w chelating agent(s), or up to about 0.1% w/w chelating agent(s), or up to about 0.05% w/w chelating agent(s).

### Additional compounds

The disinfecting composition may further comprise additional compounds, depending on particular needs and/or desired use. Examples include, but are not limited to, colorant(s), fragrant(s), surfactant(s), etc.

### pH

The disinfecting composition preferably comprises a pH that is mildly acidic to neutral. In embodiments, the pH is about pH 3.5 to about pH 7.5. In embodiments, the pH is about pH 4.5 to about pH 7.5. In embodiments, the pH is about pH 5.0 to about pH 6.0. In embodiments the pH is about pH 3.5 to about pH 5. In embodiments, the pH is about pH 6.0 to about pH 7.5. In embodiments, the pH is about pH 6.5 to about pH 7.5. In embodiments, the pH is about pH 6.0 to about pH 7.0

### Ready-to-use solutions and concentrates

The disinfecting composition of the invention may be formulated as a ready-to-use solution (i.e., as defined hereinabove) or as a liquid concentrate (e.g., 2X, 3X, 4X, 5X, 10X, 50X, 75X, 100X, 150X, 200X, 250X, 300X, 350X, 400X, 450X, 500X etc.) for further dilution with water, water solutions, alcohols, or alcohol solutions, etc. It is also envisionable to formulate the disinfecting composition of the invention as a powder for later dissolution in a suitable aqueous solution (e.g. water), by using the solid form and/or the salts form of the individual compounds in the compositions. For a composition formulated as a liquid, required ingredients may be mixed with a predetermined volume of filtered or distilled water. If necessary, the resulting mixed solution may be adjusted to the desired pH by addition of suitable acidifying agents.

**Table 1** below provides examples of concentrated disinfecting compositions with different range of concentrations of compounds, in accordance with the present invention.

**Table 1: Examples of concentrated disinfecting compositions**

| | **Concentrate 1** | **Concentrate 2** | **Concentrate 3** |
|---|---|---|---|
| | % w/w | % w/w | % w/w |
| quaternary ammonium salt(s) | 0.1 - 50.0 | 5.0 - 30.0 | 10.0 - 20.0 |
| aldehyde(s) | 0.1 - 40.0 | 2.5 - 25.0 | 7.0 - 15.0 |
| rinse agent(s) | 0.1 - 40.0 | 1.0 - 30.0 | 2.0 - 10.0 |
| chelating agent(s) | 0 - 20.0 | 0 -10.0 | 0 -5.0 |
| water | (to complete to 100%) | (to complete to 100%) | (to complete to 100%) |
| pH | ~4.5 to ~7.5 | ~5.0 to ~6.0 | ~3.5 to ~5.5 |
| Dilution factor prior to being used | 1.25X - 625X | 62.5X -375X | 250X -125X |
| Final concentration in a ready-to-use solution (% v/v) | 0.16% to 80% | 0.27% to 1.60% | 0.40% to 0.80% |

In embodiments, the concentrated disinfecting composition is diluted prior use (e.g., with water), and preferably it is used at a minimum concentration of about 0.16% w/w (i.e., dilution factor of 625X), or a minimum concentration of about 0.27% w/w (i.e., dilution factor of 375), or a minimum concentration of about 0.40% w/w (i.e., dilution factor of 250), or a minimum concentration of about 0.5% w/w (i.e., dilution factor of 200X), or a minimum concentration of about 0.80% w/w (i.e., dilution factor of 125X), or a minimum concentration of about 2% w/w (i.e., dilution factor of 50X). In embodiments the concentrated disinfecting composition is mildly acidic to neutral, e.g., about pH 3.5 to about pH 7.5. In embodiments, the concentrated disinfecting composition comprises a pH of about pH 4.5 to about pH 7.5, or about pH 5.0 to about pH 6.0, or about pH 3.5 to about pH 5.5.

**Table 2** below provide examples ready-to-use disinfecting composition (i.e., aqueous solutions) comprising different range of concentrations of compounds.

**Table 2: Examples of ready-to-use disinfecting compositions**

| | **Composition 1** | **Composition 2** | **Composition 3** |
|---|---|---|---|
| | % w/w | % w/w | % w/w |
| quaternary ammonium salt(s) | 0.08 - 1.0 | 0.10 - 0.5 | 0.20 - 0.3 |
| aldehyde(s) | 0.05 - 1.0 | 0.07 - 0.5 | 0.1 - 0.3 |
| rinse agent(s) | 0.01 - 0.5 | 0.04 - 0.1 | 0.06 - 0.15 |
| chelating agent(s) | 0-1.0 | 0.05 - 0.1 | 0.01 - 0.10 |
| water | (to complete to 100%) | (to complete to 100%) | (to complete to 100%) |
| pH | ~6.0 to ~7.5 | ~6.5 to ~7.5 | ~6.0 to ~7.0 |

Preferably, the nature and concentration of components in the disinfecting composition of the invention are selected such that the disinfecting composition is fast-drying, i.e., it requires less time to dry compared to existing composition. In embodiments, the disinfecting composition of the invention is formulated such that its drying time is less than about 30 min, or less than about 20 min, or less than about 15 min. Preferably, the disinfecting composition of the invention is advantageously formulated such that it dries faster than comparative disinfecting compositions. In embodiments, the pH of the ready-to-use disinfecting composition is mildly acidic to neutral, e.g., about pH 6.0 to about pH 7.5. In embodiments, the pH is about pH 6.5 to about pH 7.5 or about pH 6.0 to about pH 7.0.

Fast-drying is an important advantage associated with the present invention. For instance, accelerated drying allows the truck or trailer to be removed from the wash bay more quickly, thereby optimizing the truck cleaning/disinfection process, reducing loss of time and increasing productivity, which is crucial for logistics operations and the continuous transport of animals. Quick drying helps maintain a high level of biosecurity by ensuring that pathogens do not have a chance to survive and multiply in a damp environment. A wet surface can become slippery, increasing the risk of injuries to the animals. Additionally, animals transported in a wet truck can be uncomfortable and stressed. Finally, if the truck also carries feed or other supplies for the animals, excessive moisture can damage these items, leading to waste and additional costs.

### Cleaning and disinfection methods

As used herein, the term **"animal transportation unit"** encompasses containers, cages, trailers, transport vehicles and the like, which are used in the animal transportation industry. The term also encompasses related animal enclosures of animal production sites, such as cages, stalls, cubicles, etc. being used for animals and poultry. Another aspect of the present invention concerns the use of the compositions of the invention for sanitization of containers, trailers and transport vehicles in the animal transportation industry. The compositions of the invention may be particularly useful for various kinds of equipment commonly used for the transportation of livestock (e.g., cows and beef, sheep, swine, horses, poultry, etc.). It may also be useful for sanitization of agricultural and production sites, including but not limited to: farms, agricultural holdings, plantation, cattle barns, sheepfolds, pigsties, poultry houses, agricultural storage barns, and any other facility for the production of plants or animals.

According to one particular aspect, the invention relates to a method for the sanitization of animal transportation units such as containers, trailers and transport vehicles. In one embodiment the method comprises the steps of:
(1) preferably, first scraping the animal transportation unit (e.g., to remove bigger residues such mulch, feces, etc.);
(2) spraying a disinfecting composition as defined herein over the surface of animal transportation unit; and
(3) allowing to dry.

The scraping step may be optional in certain circumstance but it is generally highly preferred to ensure that the disinfecting composition is contacted with the greatest surface as possible and that lesser areas remain "hidden" or out of reach for the disinfecting composition. Additional optional steps may include: water rinsing between steps (1) and (2) to remove and/or soften any remaining residues; cleaning with a detergent after step (1) followed by water rinsing.

The following represents one particular detailed example of a procedure for cleaning a transportation unit, in accordance with another embodiment of the invention:
(1) scraping the animal transportation unit (e.g., to remove bigger residues such mulch, feces, etc.);
(2) (optionally) spraying water over the animal transportation unit to remove remaining residues and soften any dried stuck residue;
(3) spraying the animal transportation unit with a degreasing agent (e.g. Flexigel^{™} (Sani Marc Inc., Victoriaville, QC, Canada), Zoom^{™} (Sani Marc Inc.), Versagel^{™} (Sani Marc Inc.), Transit^{™}(Sani Marc Inc.), Lift^{™} (Sani Marc Inc.))
(4) rinsing with water;
(5) spraying, over the surface of animal transportation unit, a disinfecting composition in accordance with the present invention; and
(6) allowing to dry.

Advantageously, the disinfecting composition of the invention is fast-drying such that the time for drying at step (6) is faster than with existing commercial products. In embodiments, the drying time is less than about 30 min, or less than about 20 min, or less than about 15 min.

In embodiments, the disinfecting composition is sprayed as a light and fine foam. Producing a foam is advantageous as it allows for a clear view of the product's application and it ensures an even coverage over the entire surface of the container, trailer and/or transport vehicle, and thus provides the desired thorough disinfection of the entire transportation unit.

The foam advantageously provides the necessary contact time for a proper disinfection. Additionally, the foamy nature of the disinfecting composition enhances its adhesion, thereby preventing pooling of the product at the bottom of the unit, which prolongs the drying time. However, excessive foaming can slow down the drying process and cause stains on surfaces. That is why a fine foam is sufficient in our case.

The drying step may be passive such that the unit dries naturally with circulation of ambient air. In the alternative, the drying step may involve blowing air, heating the animal transportation unit, or the like to speed up evaporation and increase moisture removal efficiency. Blowing air and/or heating may improve the disinfection as any of these may kill (or at least inactivate) pathogens that may have escaped contact with the disinfectant, but that are nevertheless sensitive to desiccation.

Those skilled in the art will recognize, or be able to ascertain, using no more than routine experimentation, numerous equivalents to the specific procedures, embodiments, claims, and examples described herein. Such equivalents are considered to be within the scope of this invention and covered by the claims appended hereto. The invention is further illustrated by the following examples, which should not be construed as further or specifically limiting.

### EXAMPLES

### Example 1: Stability

A stability study was conducted over a period of eight (8) weeks at different temperatures (-15°C, 4°C, and 40°C) to simulate accelerated aging conditions, as well as winter conditions. In addition, stability tests at room temperature (about 20°C) were also carried out for a whole year.

The composition tested (Concentrate A) was as defined in **Table 3A** hereinafter.

**Table 3A: Concentrated composition used for stability testing**

| | **Concentrate A** |
|---|---|
| quaternary ammonium salt(s) | 16 % w/w |
| aldehyde(s) | 11 % w/w |
| rinse agent(s) | 5.37% w/w |
| chelating agent(s) | 0% w/w |
| water | (to complete to 100%) |
| pH | ~4.5 to ~5.5 |

No deposition or phase separation, and no variation in the concentration of active ingredients, pH, or solid percentage of the formulas, was observed during the 8 weeks of the test. The stability tests at 20°C for the whole year also demonstrated the composition's stability. Taken together, these results confirm the stability of the disinfecting composition of the invention over time.

### Example 2: Corrosion tests

Standardized aluminum, stainless steel, copper, and galvanized steel plates were weighted precisely and immersed for 24 hours in Composition B **(Table 3B)** consisting of a 0.5% solution of the concentrate defined in **Table 3A.** After that period, the plates were rinsed with water, soaked within the solution for a certain time period (i.e. passivation step), rinsed with water, air dried and weighed again.

**Table 3B: Ready-to use composition used for stability testing**

| | **Composition B** |
|---|---|
| quaternary ammonium salt(s) | 0.08% w/w |
| aldehyde(s) | 0.055% w/w |
| rinse agent(s) | 0.027% w/w |
| chelating agent(s) | 0% w/w |
| water | (to complete to 100%) |
| pH | ~6.5 to ~7.5 |

No deposition or phase separation, and no variation in the concentration of active ingredients, pH, or solid percentage of the formulas, was observed during the 8 weeks of the test. The stability tests at 20°C for the whole year also demonstrated the composition's stability. Taken together, these results confirm the stability of the disinfecting composition of the invention over time.

As shown in **Table 4,** the loss of material (or weight) from each of the metal surface was well below the tolerated value for a "non-corrosive" composition. Therefore, this test confirms that the disinfection compositions of the invention are non-corrosive.

**Table 4: Corrosion test results**

| | Stainless Steel (mm/year) | Aluminum (mm/year) | Copper (mm/year) | Galvanized Steel (mm/year) |
|---|---|---|---|---|
| Tolerance level | < 0,0250 | 0,5000 | 0,8000 | 0,0013 |
| Tested composition | 0,0010 | 0,0180 | 0,0021 | 0,0001 |

### Example 3: Bactericidal efficacy

Tests were carried out to determine the bactericidal efficacy of a disinfecting composition according to the present invention, against numerous bacterial species such as *Staphylococcus aureus, Pseudomonas aeruginosa* and *Salmonella enterica.*

These tests were performed with the composition of **Table 3** using the AOAC *Use Dilution Method* which is widely recognized for testing disinfectants (AOAC 955.14; 955.15; 964.02)

The results of these tests are summarised in **Table 5.**

**Table 5: Bactericidal efficacy**

| **Test organism** | **Exposure time (min)** | **Exposure temperature (°C)** | **Efficacy performance** |
|---|---|---|---|
| *Staphylococcus aureus (ATCC 6538)* | 5 | 20 ± 1 | Test Passed Requirements met |
| *Salmonella enterica (ATCC 10708)* | 7 | 20 ± 1 | Test Passed Requirements met |
| *Pseudomonas aeruginosa (ATCC 15442)* | 7 | 20 ± 1 | Test Passed Requirements met |

These experiments demonstrated a logarithmic reduction in bacterial count ranging from 5.0 to 6.0 log₁₀ CFU/carrier between 5 and 7 minutes at the tested concentration (final concentration of 0.5%).

### Example 4: Virucidal efficacy

Tests were carried out to determine the virucidal efficacy of a disinfecting composition according to the present invention, against viruses such as Human Adenovirus type 5.

These tests were performed with the composition of **Table 3** using the ASTM E1053 test method which is widely recognized for testing virucidal activity of chemical disinfectants (ASTM E1053-20, *Standard Practice to Assess Virucidal Activity of Chemicals Intended for Disinfection of Inanimate, Nonporous Environmental Surfaces,* available on the ATSM website).

The results of these tests are summarised in **Table 6.**

**Table 6: Virucidal disinfecting efficacy ***

| **Test organism** | **Exposure time (min)** | **Exposure temperature (°C)** | **Exposure humidity** | **Efficacy performance** |
|---|---|---|---|---|
| Human Adenovirus type 5, ATCC VR-5, Strain adenoid 75 | 10 | 20 ± 1 | 50% | Test Passed Requirements met |

| | | | | |
|---|---|---|---|---|
| * Organic soil load: 1% fetal bovine serum | | | | |

These experiments demonstrated a logarithmic reduction in viral count greater than 3.0 log₁₀ CFU/carrier within 10 minutes at a final concentration of 0.5%. in the presence of an interfering substance (1% fetal bovine serum (FBS)).

### Example 5: Test in a trailer washing facility

Tests were carried out in a trailer washing facility using the disinfecting composition according to the present invention. The trailers tested were used for transporting piglets or finishing pigs. The procedures were applied under normal operating conditions, including full cleaning and disinfection cycles, performed by the company's regular staff.

### Materials and Methods

### Cleaning and disinfection protocol

The cleaning and disinfection protocol is summarised in **Table 7.**

**Table 7: Cleaning and disinfection protocol**

| ***Steps** :* | |
|---|---|
| ***Washing product*** | Flexigel^{™}, diluted at 2-3 % v/v |
| ***Dilution system*** | Dosatron^{™} |
| ***Application rate*** | 2 GPM (low pressure) |
| ***Application appearance*** | Gel |
| ***Disinfection product*** | Concentrate A **(Table 3A)** diluted at 1 % v/v |
| ***Dilution system*** | Dosatron^{™} |
| ***Application rate*** | 2 GPM (low pressure) |
| *Application **appearance*** | Fine foam |

### Cleaning Sequence

The following steps were applied for each trailer, according to the assigned protocol:
1- Dry cleaning: Manual removal of solids (bedding, manure) using shovels.
2- Initial rinse: Interior and exterior rinsing using a high-flow nozzle (fire-hose type).
3- Exterior washing: Application of degreaser, followed by high-pressure rinsing.
4- Interior washing: Application of degreaser, followed by high-pressure rinsing.
5- Disinfection: Application of disinfectant, with no subsequent rinsing.

### ATP Sampling

Adenosine triphosphate (ATP) is a naturally occurring molecules that functions as a universal energy carrier in living cells. In the context of detection, measurement, or monitoring methods, ATP is a reliable biomarker of biological material, because it is present in all viable microorganisms, plant cells, and animal cells. Quantification of ATP can therefore serve as an indicator of microbial contamination, organic residue, or general biological activity on a surface, in a fluid, or within a product.

ATP swabs were collected before the beginning of cleaning and after disinfection. Measurements were performed using UXL-100^{™} swabs and the Clean-Trace^{™} luminometer (3M/Neogen). The readings, expressed in RLU (Relative Light Units), provide an estimate of the amount of residual organic matter on the surfaces.

### Microbiological Sampling

Microbiological analyses were performed on a 25 cm² area (5 cm × 5 cm) located near the pedestrian door of the trailers (the door used by people, not by animals). This area was chosen for its accessibility and representativeness as a frequent contact surface.

Samples were collected at three distinct points for each trailer: (1) before washing (initial state); (2) after washing with soap (pre-disinfection); and (3) after disinfection (final state). Each sample was serially diluted and plated on tryptic soy agar (TSA) petri dishes. Plates were incubated at 36 °C for 48 hours, after which colony counts were performed to estimate the total microbial load (expressed in CFU/cm²).

### Results

### Product Titration

The actual concentrations of the washing and disinfection products were measured by titration to confirm their compliance with the planned protocols, in the section Microbiological Results.

**Table 8: Concentrations of the cleaner and disinfectant**

| **Trailer Type** | **Truck** | **Cleaner : Flexigel^{™} (%v/v)** | **Disinfectant: Concentrate A (%v/v)** |
|---|---|---|---|
| Piglets | Truck 1 | 2.52 | 0.91 |
| | Truck 2 | 2.52 | 1.00 |
| Finishing pigs | Truck 1 | 1.68 | 1.00 |

### ATP Results

ATP measurements were performed at two stages of the process (before washing and after washing) using the Clean-Trace^{™} system. Results are expressed in Relative Light Units (RLU). Post-disinfection readings could not be collected, unless otherwise indicated.

**Table 9: ATP Measurements**

| **Trailer Type** | **Truck** | **Stage** | **RLU** - **Replicate 1** | **RLU** - **Replicate 2** |
|---|---|---|---|---|
| Piglets | Truck 1 | Before cleaning | 24 786 | 3 409 |
| | | After cleaning | 613 | 614 |
| | Truck 2 | Before cleaning | 1 316 | 1 404 |
| | | After cleaning | 425 | 318 |

The ATP measurements of **Table 9** reveals a significant reduction in organic load after washing for all trailers, despite some inter-sample variability. Post-wash values were generally below 1,000 RLU. These results demonstrate effectiveness of the composition of the invention in reducing residual biological material and organic contaminants on treated surfaces, thereby evidencing improved cleaning and hygiene performance, compare to conventional washing.

### Microbiological Results

Microbial samples were collected by swabbing a 25 cm² area, in triplicate, at three key time points: before washing, after washing (soap), and after disinfection. Results are presented in **Table 10.**

**Table 10: Surface Microbial Counts**

| **Trailer Type** | **Truck** | **Stage** | **Log₁₀ CFU/cm²** | **Standard Deviation** |
|---|---|---|---|---|
| Piglets | Truck 1 | Before cleaning | 1.41 | 0.43 |
| | | After cleaning | 2.00 | 0.14 |
| | | After disinfection | 0.76 | 1.00 |
| | Truck 2 | Before cleaning | 0.51 | 0.11 |
| | | After cleaning | 1.66 | 0.40 |
| | | After disinfection | 0.10 | 0.17 |
| Finishing pigs | Truck 1 | Before cleaning | 4.87 | 0.10 |
| | | After cleaning | 2.29 | 0.15 |
| | | After disinfection | 0.00 | 0.00 |

The results displayed in this table demonstrate the effectiveness of the composition of the present invention, as well as of the proposed cleaning and disinfection protocol. Indeed, a complete elimination of bacteria was measured for the finishing pig trailer. For the piglets trucks, a slight increase in CFU was observed after washing, an increase likely due to a temporary release of biofilm(s) before addition of the disinfectant. However, the bacteria were completely eliminated (the low CFU values are within the margins of error), after adding the disinfection composition in accordance with the present invention.

### Discussion

The ATP tests demonstrated a significant reduction in organic load after the washing phase, regardless of the protocol used. However, the very high initial values observed on some trailers (up to 24,786 RLU) highlight the importance of rigor in executing cleaning. Post-wash values obtained with the currently proposed protocol (below 650 RLU in all cases) suggest consistent washing efficiency with Flexigel^{™}, likely due to its gel form adhering better to surfaces than the alkaline foam used in the reference protocol.

The results show that cleaning operations alone lead to a partial and sometimes variable reduction of the microbial load (with occasional apparent increases due to the release of superficial flora). In contrast, application of the disinfectant according to the invention consistently results in a marked additional reduction of viable bacteria, reaching very low or even non-detectable levels after treatment (0.00 log₁₀ CFU/cm² for finishing pig trailers). This trend is observed in both piglet transport trucks and finishing pig trucks, despite differing initial contamination levels.

Headings are included herein for reference and to aid in locating certain sections. These headings are not intended to limit the scope of the concepts described therein, and these concepts may have applicability in other sections throughout the entire specification. Thus, the present invention is not intended to be limited to the embodiments shown herein but is to be accorded the widest scope consistent with the principles and novel features disclosed herein.

The singular forms "a", "an" and "the" include corresponding plural references unless the context clearly dictates otherwise. Thus, for example, reference to "a compound" or "a salt" (or a similar term) includes one or more of such compounds or salts, and reference to "the method" includes reference to equivalent steps and methods known to those of ordinary skill in the art that could be modified or substituted for the methods described herein.

Unless otherwise indicated, all numbers expressing quantities of ingredients, reaction conditions, concentrations, properties, and so forth used in the specification and claims are to be understood as being modified in all instances by the term "about". At the very least, each numerical parameter should at least be construed in light of the number of reported significant digits and by applying ordinary rounding techniques. Accordingly, unless indicated to the contrary, the numerical parameters set forth in the present specification and attached claims are approximations that may vary depending upon the properties sought to be obtained. Notwithstanding that the numerical ranges and parameters setting forth the broad scope of the embodiments are approximations, the numerical values set forth in the specific examples are reported as precisely as possible. Any numerical value, however, inherently contains certain errors resulting from variations in experiments, testing measurements, statistical analyses, and such.

It is understood that the examples and embodiments described herein are for illustrative purposes only and that various modifications or changes in light thereof will be suggested to persons skilled in the art and are to be included within the present invention and scope of the appended claims.

The present application encompasses all novel compounds, compositions, processes, methods, devices, systems and uses substantially as hereinbefore described with particular references to the Examples.

## Claims

1. A disinfecting composition, comprising:
- at least one quaternary ammonium salt (QAS);
- at least one aldehyde; and
- at least one rinse agent;
wherein said disinfecting composition is effective for sanitization of an animal transportation unit; and
wherein said at least one rinse agent is preferably selected from the group consisting of cetyl ethylhexanoate, glycol ether PnB, diethylene glycol butyl ether, silicone-based surfactant(s), polyethylene glycol, n-alkyltrimethyl ammonium methosulfate and mixtures thereof, and more preferably the said at least one rinse agent is an n-alkyltrimethyl ammonium methosulfate.

2. The disinfecting composition of claim 1, wherein said n-alkyltrimethyl ammonium methosulfate is selected from the group consisting of cetrimonium methosulfate, steartrimonium methosulfate, behentrimonium methosulfate, lauryltrimonium methosulfate, distearyldimonium methosulfate, dioleoylethyl hydroxyethylmonium methosulfate, and mixtures thereof.

3. The disinfecting composition of claim 1 or 2, wherein the at least one quaternary ammonium salts (QAS) is selected from the group consisting of n-alkyl diméthylbenzyl ammonium halide, n-alkyl diméthyléthylbenzyl ammonium halide dialkyl diméthyl ammonium halide, quaternary ammonium sulfates, quaternary ammonium sulfonates, quaternary ammonium nitrates, quaternary ammonium carbonates, quaternary ammonium phosphates, quaternary ammonium carboxylates and mixtures thereof.

4. The disinfecting composition of claim 3, wherein the at least one quaternary ammonium salts (QAS) is selected from the group consisting of benzalkonium chloride (BAC or BKC), cetylpyridinium chloride (CPC), cetyltriméthylammonium chloride (CTAC), didecyldimethylammonium chloride (DDAC), dodecyldimethylbenzylammonium chloride (DDBAC), benzéthonium chloride (BZT ou BTC), cetylpyridinium bromide (CPB), didecyldimethylammonium bromide (DDAB), benzyldodecyldimethylammonium bromide (BDAB).

5. The disinfecting composition of any one of claims 1 to 4, wherein the at least one aldehyde is selected from the group consisting of formaldehyde, glutaraldehyde, ortho-phthalaldéhyde (OPA), paraformaldehyde, benzaldehyde, crotonaldehyde, cinnamaldehyde, glyoxal, valeraldehyde (pentanal), and mixtures thereof.

6. The disinfecting composition of any one of claims 1 to 5, wherein said composition further comprises a chelating agent, and wherein the chelating agent is preferably selected from the group consisting of tetrasodium EDTA, trisodium methylglycinediacetate (MGDA), ethylenediamine disuccinic acid (EDDS), citric acid, sodium citrate, tetrasodium glutamate diacetate (GLDA) and mixtures thereof.

7. The disinfecting composition of any one of claims 1 to 6, wherein the disinfecting composition is fast-drying and wherein its drying time is less than about 30 min, or less than about 20 min, or less than about 15 min.

8. The disinfecting composition of any one of claims 1 to 7, wherein said disinfecting composition is formulated as a liquid concentrate, and wherein said liquid concentrate is one of Concentrate 1, Concentrate 2 and Concentrate 3 as defined in the following table:
| | **Concentrate 1** | **Concentrate 2** | **Concentrate 3** |
|---|---|---|---|
| | % w/w | % w/w | % w/w |
| quaternary ammonium salt(s) | 0.1 - 50.0 | 5.0 - 30.0 | 10.0 - 20.0 |
| aldehyde(s) | 0.1 - 40.0 | 2.5 - 25.0 | 7.0 - 15.0 |
| rinse agent(s) | 0.1 - 40.0 | 1.0 - 30.0 | 2.0 - 10.0 |
| chelating agent(s) | 0 - 20.0 | 0 -10.0 | 0 -5.0 |
| water | (to complete to 100%) | (to complete to 100%) | (to complete to 100%) |
| pH | ~4.5 to ~7.5 | ~5.0 to ~6.0 | ~3.5 to ~5.5 |
wherein said liquid concentrate is preferably Concentrate A as defined in the following table:
| | **Concentrate A** |
|---|---|
| quaternary ammonium salt(s) | 16 % w/w |
| aldehyde(s) | 11 % w/w |
| rinse agent(s) | 5.37% w/w |
| chelating agent(s) | 0% w/w |
| water | (to complete to 100%) |
| pH | ~4.5 to ~5.5 |

9. The disinfecting composition of any one of claims 1 to 7, wherein said disinfecting composition is a ready-to-use aqueous solution, and wherein said ready-to-use aqueous solution is one of Composition 1, Composition 2 and Composition 3 as defined in the following table:
| | **Composition 1** | **Composition 2** | **Composition 3** |
|---|---|---|---|
| | % w/w | % w/w | % w/w |
| quaternary ammonium salt(s) | 0.08 - 1.0 | 0.10 - 0.5 | 0.20 - 0.3 |
| aldehyde(s) | 0.05 - 1.0 | 0.07 - 0.5 | 0.1 - 0.3 |
| rinse agent(s) | 0.01 - 0.5 | 0.04 - 0.1 | 0.06 - 0.15 |
| chelating agent(s) | 0-1.0 | 0.05 - 0.1 | 0.01 - 0.10 |
| water | (to complete to 100%) | (to complete to 100%) | (to complete to 100%) |
| pH | ~6.0 to ~7.5 | ~6.5 to ~7.5 | ~6.0 to ~7.0 |
wherein said ready-to-use aqueous solution is preferably Composition B as defined in the following table:
| | **Composition B** |
|---|---|
| quaternary ammonium salt(s) | 0.08% w/w |
| aldehyde(s) | 0.055% w/w |
| rinse agent(s) | 0.027% w/w |
| chelating agent(s) | 0% w/w |
| water | (to complete to 100%) |
| pH | ~6.5 to ~7.5 |

10. The disinfecting composition of any one of claims 1 to 9, wherein said disinfecting composition forms a light foam when sprayed over a surface.

11. A method for the sanitization of an animal transportation unit, comprising the steps of:
(1) preferably, scraping the animal transportation unit to remove residues;
(2) spraying a disinfecting composition as defined in any one of claims 1 to 10 over the surface of the animal transportation unit; and
(3) allowing to dry.

12. The method of claim 11, wherein the disinfecting composition is sprayed as a foam.

13. The method of claim 11 or 12, wherein step (3) of allowing to dry comprises at least one of letting dry with ambient air, blowing air and/or heating the animal transportation unit.

14. The method of any one of claims 11 to 13, wherein the animal transportation unit is a container, a trailer, or a transport vehicle being used for animal transportation.

15. The method of any one of claims 11 to 14, wherein step (3) of allowing to dry requires less than about 30 min, or less than about 20 min, or less than about 15 min.

16. The method of any one of claims 11 to 15, wherein said method further comprises at least one of: cleaning with a detergent after step (1) followed by water rinsing; and a water rinsing step between steps (1) and (2) to remove and/or soften remaining residues.
